# EUROPÄISCHE PATENTSCHRIFT

(11) **EP 3 621 052 B1**
(45) Veröffentlichungstag und Bekanntmachung des Hinweises auf die Patenterteilung: **21.01.2026**
(21) Anmeldenummer: 18192646.0
(22) Anmeldetag: 05.09.2018
(51) Int. Cl.: G08G 1/01, G08G 1/04, G08G 1/015, G06T 7/13

(54) **VERFAHREN ZUR ANALYSE DES FAHRVERHALTENS VON KRAFTFAHRZEUGEN, AUCH AUTONOMER FAHRZEUGE**
METHOD FOR ANALYSING THE DRIVING BEHAVIOUR OF MOTOR VEHICLES, INCLUDING AUTONOMOUS VEHICLES
PROCÉDÉ D'ANALYSE DU COMPORTEMENT ROUTIER DE VÉHICULES À MOTEUR, DONT DE VÉHICULES AUTONOMES

(43) Veröffentlichungstag der Anmeldung: 11.03.2020
(73) Patentinhaber: VITRONIC Machine Vision GmbH, 65189 Wiesbaden (DE)
(72) Erfinder: MINGE, Bernhard, 65232 Taunusstein (DE); SCHERER, Frank, 64297 Darmstadt (DE); FROHN, Heiko, 37120 Bovenden (DE)
(74) Vertreter: Neumann Müller Oberwalleney Patentanwälte PartG mbB

(56) Entgegenhaltungen:
- CN-A- 107 705 563
- WEIMING HU ET AL: "Traffic accident prediction using vehicle tracking and trajectory analysis", INTELLIGENT TRANSPORTATION SYSTEMS, 2003. PROCEEDINGS. 2003 IEEE OCT. 12-15, 2003, PISCATAWAY, NJ, USA,IEEE, vol. 1, 12 October 2003 (2003-10-12), pages 220 - 225, XP010673880, ISBN: 978-0-7803-8125-4, DOI: 10.1109/ITSC.2003.1251952
- GILBERT R KENT ET AL: "Measurement of vehicle trajectories using 3D laser radar", VISUAL COMMUNICATIONS AND IMAGE PROCESSING; 20-1-2004 - 20-1-2004; SAN JOSE,, vol. 2344, 6 January 1995 (1995-01-06), pages 30 - 41, XP060033362, ISBN: 978-1-62841-730-2, DOI: 10.1117/12.198933
- NADIA PAYET ET AL: "From contours to 3D object detection and pose estimation", COMPUTER VISION (ICCV), 2011 IEEE INTERNATIONAL CONFERENCE ON, IEEE, 6 November 2011 (2011-11-06), pages 983 - 990, XP032101295, ISBN: 978-1-4577-1101-5, DOI: 10.1109/ICCV.2011.6126342
- LEOTTA M J ET AL: "Vehicle Surveillance with a Generic, Adaptive, 3D Vehicle Model", IEEE TRANSACTIONS ON PATTERN ANALYSIS AND MACHINE INTELLIGENCE, IEEE COMPUTER SOCIETY, USA, vol. 33, no. 7, 1 July 2011 (2011-07-01), pages 1457 - 1469, XP011373582, ISSN: 0162-8828, DOI: 10.1109/TPAMI.2010.217

## Beschreibung

Die Erfindung betrifft ein Verfahren zur Analyse des Fahrverhaltens von Kraftfahrzeugen mit den Verfahrensschritten: Erfassen von Fahrzeugen auf einem vordefinierten Streckenabschnitt mittels optischer Sensoren; Ermitteln der äußeren Konturen der erfassten Fahrzeuge mittels der optischen Sensoren; sowie Aufzeichnen der Trajektorie der erfassten Fahrzeuge und Bereitstellen von Trajektoriedaten für die Fahrzeuge.

Ein solches Verfahren ist aus der EP 1 446 678 A2 bekannt. Bei dem dort beschriebenen Verfahren werden Fahrzeuge in Bewegung, insbesondere Lkw auf Autobahnen, mit Hilfe einer Kamera und eines LIDAR-Systems erfasst, wobei die Kontur der Fahrzeuge ermittelt wird und die Fahrzeuge verfolgt werden. Das LIDAR-System spannt mit zumindest einem bewegten Laserstrahl oder mit mehreren Laserstrahlen mindestens eine Ebene auf, wobei aus den LIDAR-Daten in Form der Laufzeiten der Laserstrahlen der Weg, einschließlich der aktuellen Entfernung und Fahrtrichtung, und die aktuelle Geschwindigkeit des Fahrzeugs abgeschätzt werden und den anschließend ermittelten Kontur- und Strukturdaten zugeordnet werden. Mit diesem Verfahren soll eine verbesserte automatische Unterscheidung zwischen mautpflichtigen und nicht mautpflichtigen Fahrzeugen vorgenommen werden. Ferner kann mit diesem Verfahren die Geschwindigkeit der Fahrzeuge auch unter schwierigen Bedingungen, wie zum Beispiel bei einem Spurwechsel, erfasst und den jeweiligen Fahrzeugen zugeordnet werden.

Moderne Fahrerassistenzsysteme unterstützen den Fahrer bereits in einer Vielzahl von Situationen, mit dem Ziel, den Fahrer zu entlasten. Spurassistenzsysteme erleichtern die Fahrt auf der Autobahn oder im Stau und Parkassistenten ermöglichen das Einparken ohne Eingriff des Fahrers. Die Assistenzsysteme werden immer weiterentwickelt und sollen zukünftig ein autonomes Fahren ermöglichen. Dies reicht von der bedingten Automatisierung, bei der der Fahrer auf Anforderung zum Eingreifen reagieren muss, über Hochautomatisierung, bei der das Fahrzeug automatisiert geführt wird mit der Erwartung, dass der Fahrer auf Anforderung zum Eingreifen reagiert, wobei bei Ausbleiben einer menschlichen Reaktion das Fahrzeug weiterhin autonom gesteuert wird, bis hin zur Vollautomatisierung, bei der das Fahrzeug vollständig autonom fährt und die dynamische Fahraufgabe unter jeder Fahrbahn und Umgebungsbedingung wie von einem menschlichen Fahrer durchführt.

US 2008/161986 A1 zeigt, wie nicht autonom fahrende Fahrzeuge und autonome Fahrzeuge mit anderen Fahrzeugen (vehicle-to-vehicle) und mit smarten Fahrbahnabschnitten (infrastructure-to-vehicle) kommunizieren können, um zum Beispiel Unfälle oder ggf. Staus vermeiden zu können. Dafür wird ein Fahrbahnabschnitt mit optischen Sensoren und Kommunikationssensoren ausgestattet, wie z. B. Radar und Laser-Radarsensoren, um Abstände und die Geschwindigkeit, sowie die Position der Fahrzeuge messen zu können. Daneben werden Funknetzwerksensoren (Bluetooth oder Wi-Fi) zur Kommunikation zwischen Fahrzeugen und smarten Fahrbahnabschnitten eingesetzt. Es können auch weitere Informationen an die Fahrzeuge gesendet werden, wie zum Beispiel die Fahrbahnbeschaffenheit oder Wetterinformationen.

Die Assistenzsysteme für das autonome Fahren müssen in der Entwicklung trainiert und validiert werden. Um hier den Aufwand der realen Testfahrten zu reduzieren, soll ein Teil des Trainings und der Validierung anhand von Simulationen von Verkehrssituationen erfolgen. Für eine solche Simulation sind Datenbanken mit Verkehrssituationen, Fahrzeugmodellen etc. erforderlich. Die Daten für diese Datenbanken können aus realen Testfahrten und aus Daten der Überwachung von Teststrecken gewonnen werden.

Weiming Hu et al "Traffic accident prediction using vehicle tracking and trajectory analysis" (in INTELLIGENT TRANSPORTATION SYSTEMS, 2003. PROCEEDINGS. 2003 IEEE OCT. 12-15, 2003, PISCATAWAY, NJ, USA, IEEE, Bd. 1, 12. Oktober 2003 (2003-10-12), Seiten 202-225, XP010673880, DOI: 10.1109/ITSC.2003.1251952, ISBN: 978-0-7803-8125-4) beschreibt ein Wahrscheinlichkeitsmodell zur Vorhersage von Verkehrsunfällen mit Hilfe eines auf 3D-Modellen basierenden Fahrzeugtrackings.

Beispieldaten einschließlich Bewegungstrajektorien werden zunächst durch ein auf zuvor gespeicherten 3D-Modellen basierendes Fahrzeugtracking gewonnen. Ein Fuzzy-Logik neuronaler Netzalgorithmus wird dann angewandt, um Aktivitätsmuster aus den Beispieltrajektorien zu lernen. Die Fahrzeugaktivitäten werden schließlich durch Lokalisierung und Abgleich jeder beobachteten Teiltrajektorie mit den gelernten Aktivitätsmustern vorhergesagt, und die Eintrittswahrscheinlichkeit eines Verkehrsunfalls wird bestimmt.

R. Kent Gilbert et al, "Measurement of vehicle trajectories using 3D laser radar" (in VISUAL COMMUNICATIONS AND IMAGE PROCESSING; 20-1-2004 - 20-1-2004; SAN JOSE,, (19950106), Bd. 2344, DOI:10.1117/12.198933, ISBN 978-1-62841-730-2, Seiten 30 - 41, XP060033362) beschreibt ein Messsystem, das 3D-Bildgebungs-Laserradargeräte und Echtzeit-Bildverarbeitung zur quantitativen Messung und Charakterisierung der Bewegung zwischen Fahrzeugen (d.h. der Fahrzeugbewegungsumgebung) in realen Verkehrssituationen einsetzt. Das System wird am Straßenrand eingesetzt, um Daten über Fahrzeugmittelpunkts- und Steuerkursverläufe zu erfassen, die zur Untersuchung der Fahrzeugdynamik und der Unfallursachen verwendet werden. Zur Unterstützung der Entwicklung des Bild- und Datenverarbeitungsalgorithmus wurden Simulationsstudien durchgeführt.

Aufgabe der vorliegenden Erfindung ist es, ein Verfahren zur Analyse des Fahrverhaltens von Kraftfahrzeugen vorzuschlagen, bei dem neben der Beobachtung und Analyse von Fahrzeugen und des Verkehrs auch Simulationsdaten zum Simulieren von Verkehrsszenarien bereitgestellt werden.

Die Aufgabe wird durch ein Verfahren mit den Merkmalen des Anspruchs 1. Beispielhafte Ausführungsformen ergeben sich aus den abhängigen Ansprüchen.

Mit dem erfindungsgemäßen Verfahren lassen sich 3D-Modelle sowie Fahrzeugmodelle realer Fahrzeuge ableiten, um anhand dieser und anhand der Trajektorie zu einem späteren Zeitpunkt die Fahrsituation in der Simulationsumgebung wiederzugeben beziehungsweise anhand der Fahrzeugmodelle und der Trajektorien Verkehrssituationen zu simulieren.

Hierzu ist ein vordefinierter Streckenabschnitt mit mehreren optischen Sensoren am Fahrbahnrand, zum Beispiel an Masten neben der Fahrbahn, oder über der Fahrbahn an Brücken oder an Gantries ausgestattet.

Die Sensoren können LIDAR (Abkürzung für englisch "light detection and ranging") Systeme oder alternativ 3D-scannende Lasersysteme, Radare und/oder Kameras (Stereokameras, Mono-Matrixkameras oder Zeilenkameras) mit und ohne zusätzliche Beleuchtung sein. Eine Teststrecke kann ein bestimmter Streckenabschnitt innerstädtisch oder außerstädtisch sein, sei es ein kleiner Streckenabschnitt, wie z. B. eine Straßenkreuzung, eine kurze Strecke auf der Autobahn oder einer Kraftfahrstraße oder ein großer "Testpark" für Fahrzeuge mit einem Ein- und Ausfahrtstorbereich, mehreren Straßenkreuzungen, Parkplätzen und längeren kurvenreiche oder geradeausführenden Fahrbahnstrecken.

Die erfassten Fahrzeuge können zudem anhand der 3D-Modelle klassifiziert werden, sodass zum Beispiel feststellbar ist, um welche Art von Fahrzeugen es sich handelt. Die Klassifizierung kann zum Beispiel nach Personenkraftfahrzeugen, Lastkraftfahrzeugen etc. stattfinden.

Hier können alle Fahrzeuge und insbesondere autonome Fahrzeuge auf dem vordefinierten Streckenabschnitt nach ihrem Fahrverhalten beobachtet werden. Insbesondere können autonome Fahrzeuge auf dem vordefinierten Streckenabschnitt identifiziert werden und deren Reaktionen beobachtet werden, wenn sich z. B. plötzlich Hindernisse auf der Fahrbahn befinden.

Auf der gesamten Streckenlänge der Teststrecke können LIDAR-Systeme und Kameras installiert sein, so dass eine lückenlose bzw. flächendeckende Erfassung von Fahrzeugen möglich ist und alle Fahrzeugobjekte als Einzelobjekte erfasst und verfolgt werden können. Hierbei werden die Trajektorien aller Fahrzeuge ermittelt, so dass einzelne Fahrzeuge in der gesamten Testumgebung identifiziert werden können.

LIDAR-Systeme und Kameras können neben der Fahrbahn an Masten in verschiedenen Höhen angebracht sein. Ferner werden sie auch an Brücken, oberhalb der Fahrbahn angebracht. Brückenkonstruktionen mit optischen Sensoren befinden sich bevorzugt am Anfang und am Ende einer Streckenlänge innerhalb des vordefinierten Streckenabschnitts. Diese Eingangstor- und Ausgangstorsensoren an den Brücken bzw. an den Eingangs- und Ausgangstoren können vollständig alle Fahrzeuge durch ihre Form und Dimension erfassen und klassifizieren, die in einen Messbereich der Eingangs- und Ausgangstore ein- und ausfahren. Die Identifizierung kann optisch per Kennzeichen, Fahrzeughersteller, Fahrzeugtyp oder per Funk vom Fahrzeug selbst (vehicle-to-infrastructure) erfolgen.

Speziell an den Eingangs- und Ausgangstoren können mit Hilfe der Sensoren (3D-Lasersensoren oder Stereokameras) die Kontur der ein- und ausfahrenden Fahrzeugen erfasst werden. Die Konturermittlung dient ebenfalls zur Identifizierung der Fahrzeuge, hierbei wird eine dreidimensionale Form bzw. eine dreidimensionale Kontur erfasst, die die Bestimmung der Breite, Höhe und Länge der Fahrzeuge erlaubt. Die Auswertung der Bilddaten erfolgt über eine Bildfolge mittels Stereoanalyse und 3D-Rekonstruktion einzelner Bildpunkte, ggf. unter Nutzung lernender Algorithmen. Zur Konturbestimmung können ebenfalls die 3D-Laserdaten verwendet werden, wobei die Abstände von mehreren Objektpunkten vom Sensor zum Fahrzeug ermittelt werden.

Autonome Fahrzeug können sich alternativ auch selbst am Eingangs- und Ausgangstor an- bzw. abmelden und Daten wie z. B. die Dimension des jeweiligen Fahrzeugs, Fahrzeugmarke oder Fahrzeugtyp per Funk an den Empfänger am Eingangs- und Ausgangstor senden.

Weiterhin ist eine Bestimmung und Klassifizierung aus den generierten 3D-Modellen der Sensordaten eines Fahrzeugmodells (und Fahrzeugmarke) möglich, wobei die ermittelten Sensordaten (3D-Modelle) mit Konstruktionsmodelldaten von Fahrzeugen aus einer Konstruktionsmodelldatenbank abgeglichen werden. Des Weiteren kann die vorhandene Konstruktionsmodelldatenbank mit Konstruktionsmodelldaten der erfassten Fahrzeuge erweitert werden, indem reale Fahrzeugmodelle, wie sie auf der Straße vorkommen, so z. B. ein Modell eines bestimmten Fahrzeugs mit einem zusätzlichen Objekt, wie z. B. einem Ladungsgegenstand mit Ladungsüberstand auf dem Fahrzeugdach, hinzugefügt werden. Somit kann auch ein Sonderfahrzeug mit Überbreite, mit Ladungsüberstand oder weiteren Anhängern erkannt und identifiziert werden.

Dies hat Vorteile für Simulationstests bzw. für System-Validierungen von autonomen Fahrzeugen. So kann z. B. jede reale Situation für das autonome Fahrzeug simuliert und getestet werden, indem so viele reale Szenarien und Fahrzeugmodelle wie möglich aufgenommen und analysiert werden. Mit diesem Teststreckensystem mit optischen Sensoren ist eine kontinuierliche Sammlung von Daten möglich.

Die Verknüpfung aller Messdaten, der Tor- und Streckensensoren, und damit die Verknüpfung der Kontur- und Trajektoriedaten erlaubt es, einerseits eine Simulationsumgebung basierend auf realen Szenarien für ein autonomes Fahrzeug herzustellen, andererseits insbesondere ein autonomes Fahrzeug im frei fließenden Verkehr in der Testumgebung zu beobachten und damit im Kontext aller real vorkommenden Verkehrssituationen und Verkehrsteilnehmer im Testumfeld zu analysieren. Die Testszenarien dienen der Verhaltensoptimierung des autonomen Fahrzeugs, dies erfordert eine Sammlung an Datenmengen von simulierten Echtheitsszenarien und realen Testumgebungen, damit sich das autonome Fahrzeug durch den frei fließenden Verkehr unfallfrei steuern und bewegen kann.

Die Erfindung wird nachfolgend beispielhaft anhand der Figuren erläutert. Hierin zeigen
- Figur 1: einen vordefinierten Streckenabschnitt mit optischen Sensoren am Fahrbahnrand und
- Figur 2: einen vordefinierten Streckenabschnitt gemäß Figur 1 mit optischen Sensoren am Fahrbahnrand und an einem Einfahrts- und Ausfahrtstor.

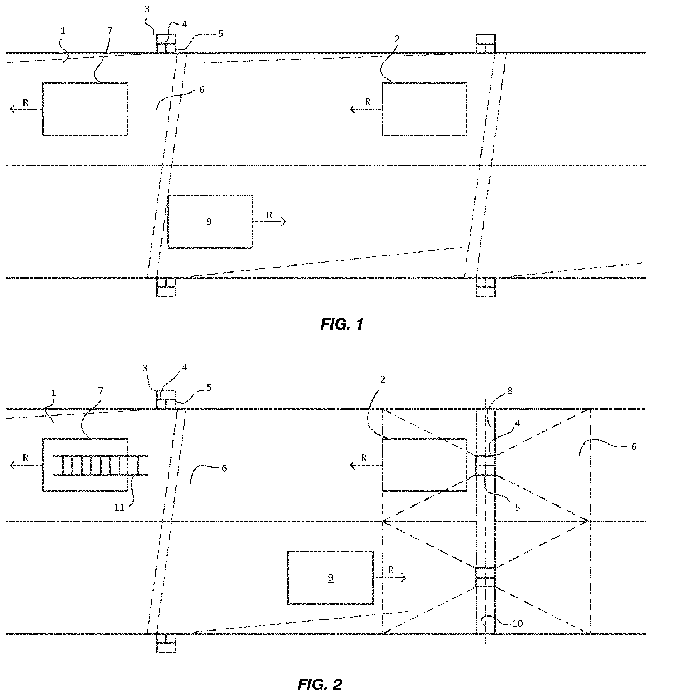

Figur 1 zeigt einen geradlinigen zweispurigen vordefinierten Streckenabschnitt 1 einer Fahrbahn innerhalb einer Testumgebung. Ein autonomes Fahrzeug 2 bewegt sich auf dem vordefinierten Streckenabschnitt 1 in einer Richtung R (hier von rechts nach links) und wird während der Fahrt mit optischen Sensoren 3, 4 überwacht, die sich in Vorrichtungen 3, mit jeweils einem geeigneten Gehäuse am Fahrbahnrand an einem Mast oberhalb der Fahrzeuge in einer Höhe von beispielsweise 1 - 3 m, befinden. In dem bezeigten Beispiel sind alle Vorrichtungen 3 identische. Bei den optischen Sensoren handelt es sich um ein LIDAR-System 4 und eine Kamera 5 je Vorrichtung 3, die den kompletten frei fließenden Verkehr in einem jeweiligen Messbereich 6 beobachten. Es sind mehrere solcher Sensoren am Straßenrand installiert, damit alle Fahrzeuge 2, 7, 9 innerhalb des vordefinierten Streckenabschnitts 1 lückenlos und flächendeckend beobachtet und analysiert werden können. Es werden Bewegungstrajektorien (Bewegungspfade) aller Fahrzeuge 2, 7, 9 ermittelt, um den zurückgelegten Weg auf vordefinierten Streckenabschnitt 1 analysieren zu können. Weiterhin werden Form, Größe, Fahrzeugmarke bzw. -hersteller und Modell der Fahrzeuge 2, 7, 9 erfasst und daraus 3D-Konturen abgeleitet. Zusätzlich wird die Geschwindigkeit der Fahrzeuge 2, 7, 9 ermittelt und die Abstände zwischen den Fahrzeugen 2, 7, 9 können auch ermittelt werden.

Figur 2 zeigt denselben vordefinierten Streckenabschnitt 1 wie Figur 1. In Figur 2 sind jedoch zwei der Vorrichtungen 3 an einem Einfahrts- und Ausfahrtstor 8 angeordnet. Das autonome Fahrzeug 2 fährt in den vordefinierten Streckenabschnitt 1 und befindet sich in einem Messbereich 6 des Einfahrts- und Ausfahrtstors 8. Das Einfahrts- und Ausfahrtstor 8 dient an dieser Stelle als Einfahrtskontrollpunkt. Hierbei kann sich das autonome Fahrzeug 2 per Funk am Einfahrts- und Ausfahrtstor 8 anmelden. Gleichzeitig wird das autonome Fahrzeug 2 mittels Konturermittlung der Kamera 5 im Messbereich 6 und einem Erfassungsbereich des Lasermessfelds 10 am Einfahrts- und Ausfahrtstor 8 auf die Größe, Form, Modell und Fahrzeugtyp identifiziert. Nachdem sich das autonome Fahrzeug 2 am Einfahrts- und Ausfahrtstors 8 angemeldet hat, passiert es den vordefinierten Streckenabschnitt 1, wobei es wie im Zusammenhang mit Figur 1 beschrieben, mittels Bewegungstrajektorien, ermittelt von den Streckensensoren am Fahrbahnrand, weiter beobachtet wird. So werden auch weitere Fahrzeuge 7, 9 am Einfahrts- und Ausfahrtstor 8 erfasst und es werden 3D-Konturen und die Bewegungstrajektorien aufgezeichnet. An einem der Fahrzeuge 7 wird ein weiteres Objekt erfasst, in diesem Fall wird ein Ladungsüberstand einer Leiter 11 erfasst, welche sich auf einem Fahrzeugdach des Fahrzeugs 7 befindet.

Am Ende einer jeden Testfahrt passiert das autonome Fahrzeug 2 ein weiteres hier nicht dargestelltes Einfahrts- und Ausfahrtstor 8, vergleichbar zum Fahrzeug 9, das das Einfahrts- und Ausfahrtstor 8 in einer Ausfahrtsrichtung durchfährt, wobei das Einfahrts- und Ausfahrtstor 8 als Ausfahrtskontrollpunkt fungiert. Das autonome Fahrzeug 2 meldet sich per Funk ab und es wird wiederum eine Kontur aufgezeichnet, wobei die Größe, die Form, das Modell und der Fahrzeugtyp nochmals identifiziert und abgeglichen werden.

Am Ende einer Testfahrt des autonomen Fahrzeugs 2 oder weiterer Fahrzeuge 7, 9 werden jegliche Bewegungstrajektorien- und Konturdaten gesammelt, verknüpft, analysiert und mit bereits vorhanden Daten (z. B. 3D-Modellen von Fahrzeugen) verglichen. Diese Daten von realen Verkehrsszenarien können der Verhaltensoptimierung für das autonome Fahrzeug 2 dienen. Die Daten werden als Simulationstests für weitere System-Validierungen für autonome Fahrzeuge 2 gesammelt.

### Bezugszeichenliste

- 1: vordefinierter Streckenabschnitt
- 2: autonomes Fahrzeug
- 3: Vorrichtungen
- 4: LIDAR-System
- 5: Kamera
- 6: Messbereich
- 7: Fahrzeuge
- 8: Einfahrts- und Ausfahrtstor
- 9: Fahrzeuge
- 10: Lasermessfeld
- 11: Leiter

## Patentansprüche

1. Verfahren zur Analyse des Fahrverhaltens von Kraftfahrzeugen (2, 7, 9), auch autonomer Fahrzeuge (2), umfassend die folgenden Verfahrensschritte:
Erfassen von Fahrzeugen (2, 7, 9) auf einem vordefinierten Streckenabschnitt (1) mittels optischer Sensoren (3, 4), wobei die optischen Sensoren (3, 4) am Fahrbahnrand oder über der Fahrbahn an Brücken oder an Gantries angeordnet sind,
Ermitteln der äußeren Konturen der erfassten Fahrzeuge (2, 7, 9) mittels der optischen Sensoren (3, 4) und Ableiten von 3D-Modellen der erfassten Fahrzeuge (2, 7, 9) aus den ermittelten äußeren Konturen, wobei die Länge, Breite und Höhe der Fahrzeuge erfasst werden,
Aufzeichnen der Trajektorie und der Geschwindigkeit der erfassten Fahrzeuge (2, 7, 9) und Bereitstellen von Trajektoriedaten für die Fahrzeuge (2, 7, 9), Erstellen von Fahrzeugmodellen der erfassten Fahrzeuge (2, 7, 9) anhand zumindest der 3D-Modelle und der Trajektoriedaten, und
Simulieren eines realen Verkehrsszenarios in einer computergestützten Simulationsumgebung mit den Fahrzeugmodellen der erfassten Fahrzeuge (2, 7, 9) zum Validieren eines Assistenzsystems eines autonomen Fahrzeugs (2).

2. Verfahren nach Anspruch 1,
**dadurch gekennzeichnet,**
**dass** die erfassten Fahrzeuge (2, 7, 9) anhand der 3D-Modelle klassifiziert werden.

3. Verfahren nach einem der Ansprüche 1 oder 2,
**dadurch gekennzeichnet,**
**dass** alle Fahrzeuge (2, 7, 9) auf dem vordefinierten Streckenabschnitt (1) erfasst werden.

4. Verfahren nach einem der Ansprüche 1 bis 3,
**gekennzeichnet durch**
den weiteren Verfahrensschritt:
Identifizieren von autonomen Fahrzeugen (2) auf dem vordefinierten Streckenabschnitt (1).

5. Verfahren nach einem der Ansprüche 1 bis 4,
**dadurch gekennzeichnet,**
**dass** die erfassten Fahrzeuge (2, 7, 9) durch Abgleichen der 3D-Modelle mit Konstruktionsmodelldaten aus einer Konstruktionsmodelldatenbank mit den äußeren Konturen bekannter Fahrzeuge klassifiziert werden.

6. Verfahren nach Anspruch 5,
**gekennzeichnet durch**
den weiteren Verfahrensschritt:
Ergänzen der Konstruktionsmodelldaten der Konstruktionsmodelldatenbank anhand der ermittelten äußeren Konturen der erfassten Fahrzeuge (2, 7, 9) einschließlich eventueller zusätzlicher Objekte (11).

7. Verfahren nach einem der Ansprüche 1 bis 6,
**dadurch gekennzeichnet,**
**dass** die erfassten Fahrzeuge (2, 7, 9) auf dem vordefinierten Streckenabschnitt (1) flächendeckend erfasst werden.

8. Verfahren nach einem der Ansprüche 1 bis 7,
**dadurch gekennzeichnet,**
**dass** an einem Einfahrtskontrollpunkt und an einem Ausfahrtskontrollpunkt des vordefinierten Streckenabschnitts (1) alle ein- und ausfahrenden Fahrzeuge (2, 7, 9) vollständig durch ihre Form und Dimension erfasst und klassifiziert werden.

9. Verfahren nach Anspruch 8,
**dadurch gekennzeichnet,**
**dass** sich autonome Fahrzeuge (2) am Einfahrtskontrollpunkt des vordefinierten Streckenabschnitts (1) anmelden und am Ausfahrtskontrollpunkt des vordefinierten Streckenabschnitts (1) abmelden.

10. Verfahren nach einem der Ansprüche 8 oder 9,
**dadurch gekennzeichnet,**
**dass** die autonomen Fahrzeuge (2) bei der Anmeldung und bei der Abmeldung Identifikationsdaten über Funk übermitteln.

11. Verfahren nach einem der Ansprüche 8 bis 10,
**dadurch gekennzeichnet,**
**dass** bei der Anmeldung und bei der Abmeldung der autonomen Fahrzeuge (2) Identifikationsdaten anhand der Kennzeichen ermittelt werden.

## Claims

1. Method for analyzing the driving behavior of motor vehicles (2, 7, 9), including autonomous vehicles (2), comprising the following method steps:
Detecting of vehicles (2, 7, 9) on a predefined road section (1) by means of optical sensors (3, 4), wherein the optical sensors (3, 4) are arranged at the edge of the road or above the roadway on bridges or on gantries,
Determining the outer contours of the detected vehicles (2, 7, 9) by means of the optical sensors (3, 4) and deriving 3D models of the detected vehicles (2, 7, 9) from the determined outer contours, wherein the length, width and height of the vehicles are detected,
Recording the trajectory and speed of the detected vehicles (2, 7, 9) and providing trajectory data for the vehicles (2, 7, 9),
Creating vehicle models of the detected vehicles (2, 7, 9) using at least the 3D models and the trajectory data, and
Simulating a real traffic scenario in a computer-aided simulation environment with the vehicle models of the detected vehicles (2, 7, 9) to validate an assistance system of an autonomous vehicle (2).

2. Method according to claim 1,
**characterized in**
**that** the detected vehicles (2, 7, 9) are classified using the 3D models.

3. Method according to one of claims 1 or 2,
**characterized in**
**that** all vehicles (2, 7, 9) on the predefined road section (1) are being detected.

4. Method according to any one of claims 1 to 3,
**characterized by**
the further method step:
Identifying of autonomous vehicles (2) on the predefined road section (1).

5. Method according to any one of claims 1 to 4,
**characterized in**
**that** the detected vehicles (2, 7, 9) are classified by comparing the 3D models with design model data from a design model database with the outer contours of known vehicles.

6. Method according to claim 5,
**characterized by**
the further method step:
Supplementing the design model data of the design model database using the determined outer contours of the detected vehicles (2, 7, 9) including any additional objects (11).

7. Method according to any one of claims 1 to 6,
**characterized in**
**that** the detected vehicles (2, 7, 9) are detected over the entire area of the predefined road section (1).

8. Method according to any one of claims 1 to 7,
**characterized in**
**that** at an entry control point and at an exit control point of the predefined road section (1) all entering and exiting vehicles (2, 7, 9) are completely detected and classified by their shape and dimensions.

9. Method according to claim 8,
**characterized in**
**that** autonomous vehicles (2) register at the entry control point of the predefined road section (1) and deregister at the exit control point of the predefined road section (1).

10. Method according to one of claims 8 or 9,
**characterized in**
**that** the autonomous vehicles (2) transmit identification data by radio when registering and deregistering.

11. Method according to any one of claims 8 to 10,
**characterized in**
**that** identification data is determined on the basis of the license plates when the autonomous vehicles are registered and deregistered (2).

## Revendications

1. Procédé, destiné à analyser le comportement routier de véhicules (2, 7, 9), également de véhicules (2) autonomes, comprenant les étapes de procédé suivantes, consistant à :
détecter des véhicules (2, 7, 9) sur un tronçon de trajet (1) prédéfini, au moyen de capteurs optiques (3, 4), les capteurs optiques (3, 4) étant placés sur le bord de la voie de circulation ou au-dessus de la voie de circulation, sur des ponts ou sur des portiques,
déterminer les contours extérieurs des véhicules (2, 7, 9) détectés, au moyen des capteurs optiques (3, 4) et déduire des modèles en 3 D des véhicules (2, 7, 9) détectés à partir des contours extérieurs déterminés, la longueur, la largeur et la hauteur des véhicules étant détectées,
enregistrer la trajectoire et la vitesse des véhicules (2, 7, 9) détectés et mettre à disposition des données de trajectoire pour les véhicules (2, 7, 9),
établir des modèles de véhicules pour les véhicules (2, 7, 9) détectés, à l'aide d'au moins les modèles en 3 D et des données de trajectoire et
simuler un scénario réel de trafic dans un environnement simulé assisté par ordinateur avec les modèles de véhicules des véhicules (2, 7, 9) détectés, pour valider un système d'assistance d'un véhicule (2) autonome.

2. Procédé selon la revendication 1,
**caractérisé**
**en ce que** les véhicules (2, 7, 9) détectés sont classifiés à l'aide des modèles en 3 D.

3. Procédé selon l'une quelconque des revendications 1 ou 2,
**caractérisé**
**en ce que** tous les véhicules (2, 7, 9) sont détectés sur le tronçon de trajet (1) prédéfini.

4. Procédé selon l'une quelconque des revendications 1 à 3,
**caractérisé par**
l'étape de procédé suivante, consistant à :
identifier des véhicules (2) autonomes sur le tronçon de trajet (1) prédéfini.

5. Procédé selon l'une quelconque des revendications 1 à 4,
**caractérisé**
**en ce que**, pour ajuster les modèles en 3 D, les véhicules (2, 7, 9) détectés sont classifiés avec des données de modèles de construction issus d'une base de données de modèles de construction avec les contours extérieurs de véhicules connus.

6. Procédé selon la revendication 5,
**caractérisé par**
l'étape de procédé supplémentaire, consistant à : compléter les données de modèles de construction de la base de données de modèles de construction à l'aide des contours extérieurs déterminés des véhicules (2, 7, 9) détectés, en incluant d'éventuels objets (11) additionnels.

7. Procédé selon l'une quelconque des revendications 1 à 6,
**caractérisé**
**en ce que** les véhicules (2, 7, 9) détectés sont détectés intégralement sur le tronçon de trajet (1) prédéfini.

8. Procédé selon l'une quelconque des revendications 1 à 7,
**caractérisé**
**en ce que** sur un point de contrôle d'entrée et sur un point de contrôle de sortie du tronçon de trajet (1) prédéfini, tous les véhicules (2, 7, 9) entrants et sortants sont totalement détectés et classifiés selon leur forme et leur dimension.

9. Procédé selon la revendication 8,
**caractérisé**
**en ce que** des véhicules (2) autonomes se connectent au point de contrôle d'entrée du tronçon de trajet (1) prédéfini et se déconnectent sur le point de contrôle de sortie du tronçon de trajet (1) prédéfini.

10. Procédé selon l'une quelconque des revendications 8 ou 9,
**caractérisé**
**en ce que**, lors de la connexion et lors de la déconnexion, les véhicules (2) autonomes transmettent par radio des données d'identification.

11. Procédé selon l'une quelconque des revendications 8 à 10,
**caractérisé**
**en ce que** lors de la connexion et lors de la déconnexion du véhicule (2) autonome, des données d'identification sont déterminées à l'aide des plaques d'immatriculation.
